# EUROPÄISCHE PATENTSCHRIFT

(11) **EP 1 196 312 B1**
(45) Veröffentlichungstag und Bekanntmachung des Hinweises auf die Patenterteilung: **17.03.2004**
(21) Anmeldenummer: 00954360.4
(22) Anmeldetag: 24.07.2000
(51) Int. Cl.: B60R 21/20

(54) **VORRICHTUNGEN UND VERFAHREN ZUR HERSTELLUNG EINER AIRBAGVORRICHTUNG SOWIE DAMIT HERGESTELLTE AIRBAGVORRICHTUNG**
DEVICES AND METHOD FOR PRODUCING AN AIRBAG DEVICE AND AIRBAG DEVICE PRODUCED USING SAID DEVICES AND ACCORDING TO SAID METHOD
DISPOSITIFS ET PROCEDES POUR PRODUIRE UN SYSTEME D'AIRBAG, ET SYSTEME D'AIRBAG AINSI PRODUIT

(30) Priorität: 23.07.1999 DE 29912924 U; 02.05.2000 DE 20007883 U
(43) Veröffentlichungstag der Anmeldung: 17.04.2002
(73) Patentinhaber: Volkswagen Aktiengesellschaft, 38436 Wolfsburg (DE)
(72) Erfinder: MÜLLER, Olaf, D-65428 Rüsselsheim (DE)
(74) Vertreter: Lindner, Manfred Klaus, Dipl.-Phys.
(86) Internationale Anmeldenummer: PCT/DE2000/002391
(87) Internationale Veröffentlichungsnummer: WO 2001/007297

(56) Entgegenhaltungen:
- WO-A-90/14973
- DE-A- 3 611 486
- DE-A- 19 701 564
- "TETHERED DEPLOYMENT DOOR" RESEARCH DISCLOSURE,GB,INDUSTRIAL OPPORTUNITIES LTD. HAVANT, Nr. 386, 1. Juni 1996 (1996-06-01), Seiten 349-351, XP000596164 ISSN: 0374-4353
- PATENT ABSTRACTS OF JAPAN vol. 015, no. 168 (M-1107), 26. April 1991 (1991-04-26) & JP 03 034814 A (MAZDA MOTOR CORP), 14. Februar 1991 (1991-02-14)

## Beschreibung

Die Erfindung betrifft eine Vorrichtung und ein Verfahren zur Herstellung einer Airbagvorrichtung sowie eine damit hergestellte Airbagvorrichtung.

Die auf die vorliegende Anmelderin zurückgehenden älteren deutschen Patentanmeldungen 197 12 782.7, 197 26 878.1 und 197 33 896.8, europäische Patentanmeldung 98 10 55 51.0, internationale Patentanmeldung PCT/DE 99/01564 sowie Gebrauchsmusteranmeldungen 298 08 317.5, 298 09 554.8, 298 19 165.2, 298 20 722.2, 299 05 000.9, 299 05 919.7, 299 08 946.0, 299 10 059.6 und 299 13 628.0 befassen sich allgemein mit einer Airbagvorrichtung. Die vorliegende Erfindung betrifft Verbesserungen sämtlicher in der früheren Anmeldung behandelten Techniken und Ausführungsbeispiele.

Heutige Airbagklappen werden bei einem Unfall oder Crash aufgestoßen. Die Energie des Airbags ist hierbei so groß, dass Menschen im Nahbereich des Austritts, z.B. durch Vorverlagerung des Kopfes, einen Genickbruch erleiden können.

Von der gleichen vorliegenden Anmelderin werden z.B. in der DE 197 127 82, DE 197 268 78 und DE 197 33 896 sowie 200 07 883.6 Möglichkeiten aufgezeigt, einen Airbagdeckel vor dem Austritt eines Airbags in ein Modul bzw. eine Armaturentafel hineinzuziehen.

Aus der DE 197 01 564 A ist ein Verfahren und eine Airbagvorrichtung gemäß dem Oberbegriff der Ansprüchs 1 und 11 bekannt. Diese so herstellbare Vorrichtung ist nicht optimal hinsichtlich der Sicherheit für damit zu schützende Insassen und erfordert einen hohen Herstellungsaufwand.

Aus Patent Abstracts of Japan, Vol. 015, Nr. 168 (M-1107), 26. April 1991 & IP 03034814 A ist eine Vorrichtung zur Herstellung einer Airbagklappe gemäß dem Oberbegriff des Anspruchs 6 bekannt, die zum Austritt eines Airbags von einem Insassen weg, wenn sie in ein Fahrzeug eingebaut ist, zu öffnen ist, wobei die Airbagklappe zusammen mit einer Lenkradarmatur, in die sie integriert ist, eine gemeinsame Abdeckschicht aufweist, die dem Insassen zugewandt ist, wobei die Vorrichtung ein Werkzeug mit Gewebehalteeinrichtungen enthält, mittels denen das Gewebe innerhalb der Airbagklappe mit der Abdeckschicht derart zusammenbringbar ist, dass das Gewebe relativ zur Abdeckschicht positionierbar und festlegbar ist.

Mit der vorliegenden Erfindung wird das Ziel verfolgt, Herstellungsvorrichtungen und -verfahren für eine Airbagvorrichtung sowie eine damit hergestellte Airbagvorrichtung zu schaffen, die selbst sowie deren Auslöseverfahren dazu ausgelegt sind, um Verletzungen bei Personen durch die Airbagauslösung zu vermeiden, wobei die Herstellungsvorrichtungen und -verfahren für eine Airbagvorrichtung eine zuverlässige und rationelle Fertigung ermöglichen.

Zur Erreichung dieses Ziels werden Techniken zur Anbindung einer Mechanik einer einziehbaren beispielsweise Beifahrerairbagklappe an eine Armaturentafelfolie mit in vorteilhafter Weise ferner ausreichender Festigkeit und optimalem Aussehen auf der Sichtseite sowie eine Airbagvorrichtung mit einer entsprechenden Ausgestaltung geschaffen.

Des erfindungsgemäße Verfahren zur Herstellung einer Airbagvorrichtung ist im Anspruch 1 angegeben.

Eine Weiterbildung des Verfahrens besteht darin, dass die noch nicht vollständig erkaltete Abdeckschicht gekühlt wird, nachdem das Gewebe an oder in die Abdeckschicht gebracht wurde.

Eine andere Fortbildung des Verfahrens besteht darin, dass das Gewebe innerhalb der Fläche von zwei benachbarten Airbagklappen an oder in die Abdeckschicht gebracht und längs der Grenzlinie zwischen den beiden Airbagklappen durchtrennt wird, bevor der Schaum zwischen den Verbund aus Gewebe und Abdeckschicht einerseits und dem Airbagklappenträger eingebracht wird.

Weiterhin kann bei dem Verfahren vorgesehen sein, dass die Abdeckschicht längs des Umfangs der Airbagklappe geschwächt wird, bevor der Schaum zwischen den Verbund aus Gewebe und Abdeckschicht einerseits und dem Airbagklappenträger eingebracht wird. Ferner ist es im Rahmen der Erfindung bevorzugt, wenn das Gewebe flächig oder fortlaufend an oder in die Abdeckschicht bewegt wird.

Durch die Erfindung wird ferner eine Vorrichtung zur Herstellung einer Airbagvorrichtung mit einer Airbagklappe gemäß Anspruch 6 geschaffen.

Dabei ist es möglich, dass das Werkzeug eine Kühlvorrichtung zum Kühlen der Abdeckschicht aufweist, oder dass die Gewebehalteeinrichtungen ausgelegt sind, um das Gewebe flächig oder fortlaufend an oder in die Abdeckschicht zu bewegen.

Bei anderen Weiterbildungen der Vorrichtung ist im Rahmen der Erfindung vorgesehen, dass das Werkzeug Gewebetrenneinrichtungen und/oder Folienschwächungseinrichtungen enthält. Bevorzugt sind ggf. die Gewebetrenneinrichtungen ausgelegt, das Gewebe an einer Trennungslinie zwischen zwei Airbagklappen zu durchtrennen, und/oder sind ggf. die Folienschwächungseinrichtungen ausgelegt, die Abdeckschicht längs der Umfangslinie der Airbagklappe zu schwächen.

Zur Erreichung des oben genannten Ziels schafft die Erfindung weiterhin eine Airbagvorrichtung mit einer Airbagklappe mit den Merkmalen des Anspruchs 11.

Das Gewebe kann Zwischenräume aufweisen, durch welche das Klebemittel oder Material direkt mit der Abdeckschicht in Verbindung ist.

Es kann ferner das Gewebe in die Abdeckschicht zumindest teilweise eingebettet sein. Außerdem oder zusätzlich kann das Gewebe Fäden enthalten, die mit einem mit dem Material der nicht ausgehärteten Abdeckschicht fest verbindenden Material zumindest teilweise überzogen sind, oder das Gewebe kann zumindest teilweise mit einem solchen Material überzogen sein.

Insbesondere kann die vorliegende Erfindung weiterhin vorteilhaft zu einer Reduzierung der Aggressivität des Bags beitragen, indem auf ungefährliche Weise eine Öffnung zum Austritt eines Airbags in einer Armaturentafel erzeugt wird.

Die Erfindung beinhaltet ferner Maßnahmen bei Airbagvorrichtungen, wie insbesondere Herstellungsverfahren und Herstellungsvorrichtungen mit einem Werkzeug zur Anbindung eines Zugmittels an einer Folie, die eine Armaturentafel mit darin integrierter Airbagklappe oder allgemein Airbagabdeckung überzieht. Die vorliegende Erfindung schafft damit die Möglichkeit, großseriengerecht an einer Armaturentafeigießhaut ein Gewebe anzubringen, so daß diese Folie bei einer sich in das Modul hineinziehenden Airbagklappe nach innen in das Modul an dem Airbagdeckel bleibt.

Vorzugsweise ist das Werkzeug in Größe und Kontur dem Airbagaustrittsbereich angepaßt.

Weitere vorzugsweise und/oder vorteilhafte Ausgestaltungen der Erfindung ergeben sich aus den abhängigen Ansprüchen.

Die Erfindung wird anhand exemplarischer Ausführungsbeispiele nachfolgend unter Bezugnahme auf die Zeichnung näher erläutert, in der
- Fig. 1: schematisch links während eines Sprühvorgangs und rechts während eines Kühlvorgangs ein erstes Ausführungsbeispiel einer Herstellungsvorrichtung für eine Airbagklappe einer Airbagvorrichtung in einer Schnittdarstellung zeigt,
- Fig. 2: ein Gewebeschneidemesser aus der Fig. 1 vergrössert als Einzelheit schematisch in einem Schnitt zeigt,
- Fig. 3: eine Alternative des Gewebeschneidemessers aus der Fig. 1 analog zur Fig. 2 schematisch in einem vergrösserten Schnitt zeigt,
- Fig. 4: eine schematische geschnittene Teilansicht der Airbagklappe der Airbagvorrichtung ist, die mit der Herstellungsvorrichtung nach der Fig. 1 hergestellt wurde,
- Fig. 5 und 6: schematische und teilweise Schnittansichten eines zweiten, nicht von den Ansprüchen abgedeckten Ausführungsbeispiels einer Herstellungsvorrichtung für eine Airbagklappe einer Airbagvorrichtung sind,
- Fig. 7: eine schematische teilweise Schnittansicht einer Airbagklappe eines ebenfalls nicht von den Ansprüchen abgedeckten, dritten Ausführungsbeispiels einer Airbagklappe ist,
- Fig. 8: eine erste Variante zur Herstellung des dritten Ausführungsbeispiels der Airbagklappe von Fig. 7 in einer teilweisen und schematischen Schnittansicht zeigt,
- Fig. 9: eine zweite Variante zur Herstellung des dritten Ausführungsbeispiels der Airbagklappe von Fig. 7 in einer teilweisen und schematischen Schnittansicht zeigt, und
- Fig. 10: ein Detail der Airbagklappe von Fig. 7 zur Anbindung eines Zugseils zur Verbindung mit einer Einzugsmechanik in einer schematischen Draufsicht darstellt.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Beispielsweise in der älteren deutschen Patentanmeldung 197 33 896.8 ist ausführlich Sinn und Zweck einer Airbagvorrichtung mit einer Airbagklappe offenbart, die im Falle eines Crashs oder Unfalls vor dem Austritt eines Airbags in die Airbagvorrichtung, wie z.B. ein Airbagmodul, hinein oder hinter eine Armaturentafel verschwindet.

Die Maßnahmen gemäß der vorliegenden Erfindung sorgen dafür, dass bei den vorbekannten Ausführungen nicht nur der Träger des Airbagdeckels oder der Airbagklappe nach innen, d.h. insbesondere hinter die Armaturentafel vom Insassen weg, gezogen wird, weil die übliche Schaumhaftung zwischen einer Armaturentafelfolie und der Airbagklappe zu schwach ist und reißt, sondern dass auch die Armaturentafelfolie zuverlässig mit eingezogen wird.

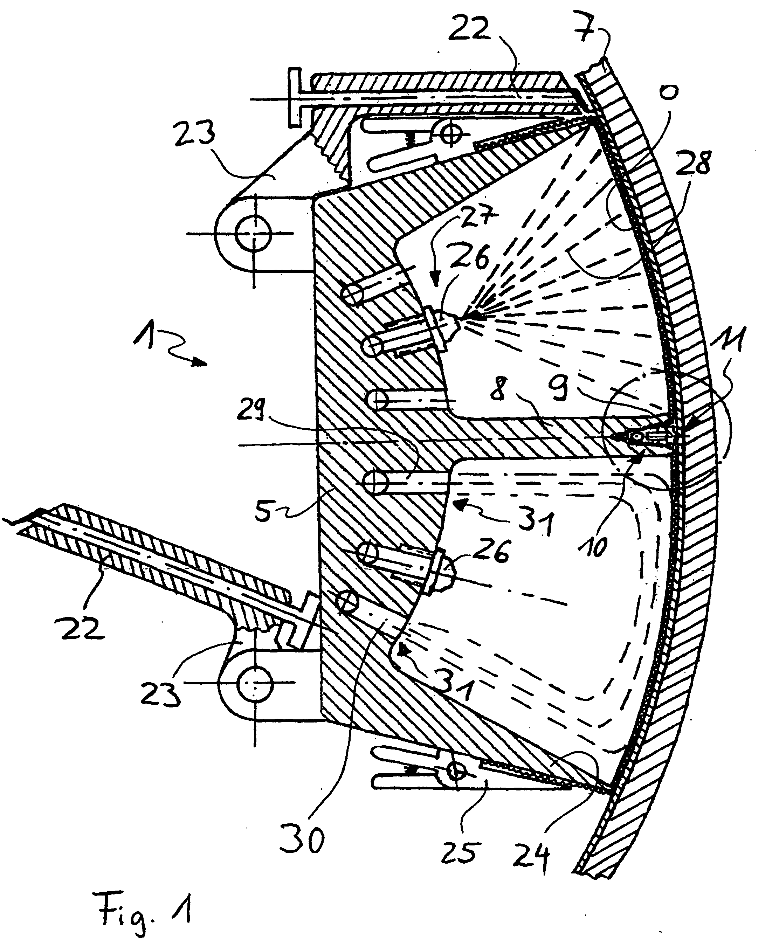

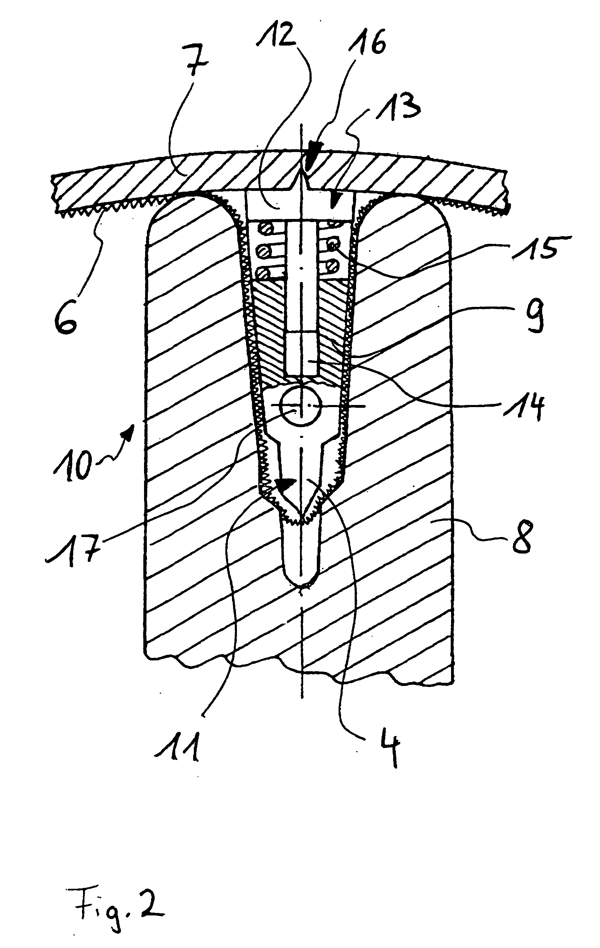

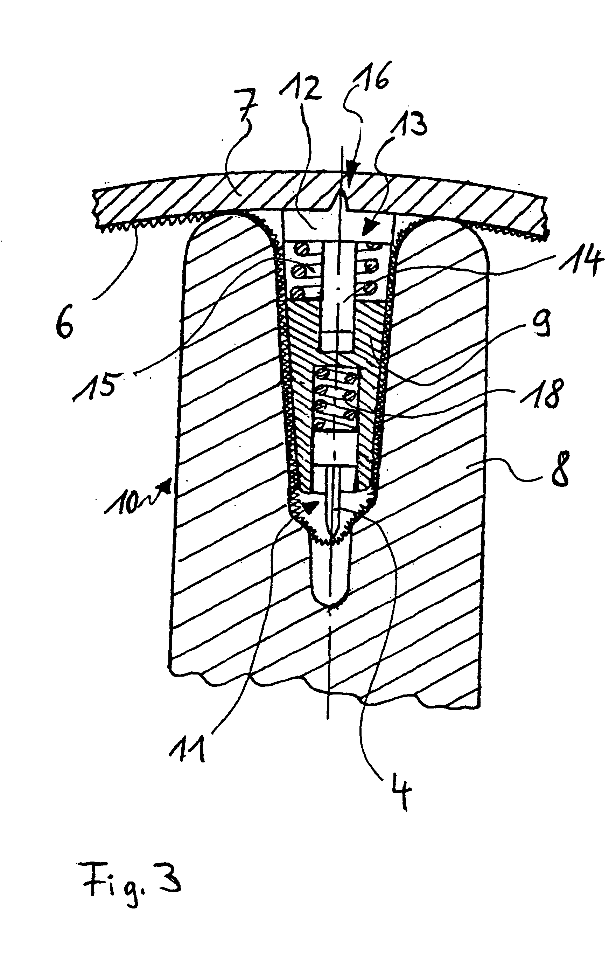

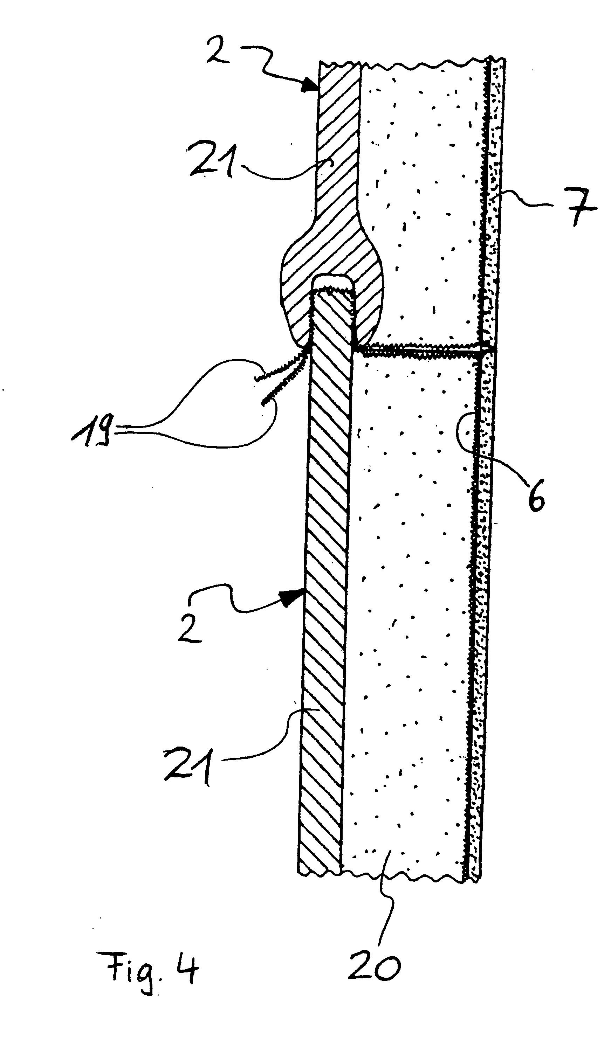

In den Fig. 1 bis 4 ist schematisch ein erstes Ausführungsbeispiel einer Herstellungsvorrichtung für eine Airbagvorrichtung sowie letztere ausschnittweise gezeigt. Die Fig. 1 zeigt schematisch links während eines Sprühvorgangs und rechts während eines Kühlvorgangs eine Herstellungsvorrichtung 1 für eine Airbagklappe 2 (Fig. 4) einer Airbagvorrichtung. In der Fig. 2 ist ein Gewebeschneidemesser 4 aus der Fig. 1 vergrössert als Einzelheit der Herstellungsvorrichtung 1 schematisch gezeigt. Von diesem Gewebeschneidemesser 4 ist in der Fig. 3 eine Alternative schematisch dargestellt. Die Fig. 4 ist eine schematische geschnittene Teilansicht der Airbagklappe 2 der Airbagvorrichtung. Die Airbagklappe(n) 2 weist/weisen zusammen mit einer Armaturentafel (nicht gezeigt), in die sie integriert ist, eine gemeinsame Abdeckschicht auf, die dem Insassen zugewandt ist.

Das erste Ausführungsbeispiel wird nachfolgend unter Bezugnahme auf die Fig. 1 bis 4 näher beschrieben. Die Herstellungsvorrichtung 1 enthält ein Werkzeug 5, das insbesondere dazu dient, ein Gewebe 6 an einer Armaturentafelfolie 7, die eine Gießhaut und eine gemeinsame Abdeckschicht der Armaturentafel und der Airbagklappe(n) ist, zur Anbindung daran in Position zu bringen (Fig. 1).

Im Falle von zwei sich öffnenden Airbagklappen 2 (Fig. 4) wird das Gewebe 6 entsprechend einer Ausgestaltung der Erfindung in einem Stück eingebracht und in der Mitte in einer Festhalteleiste 8 mit einem Gewebeklemmkonus 9 gehalten, der Bestandteil von Gewebehalteeinrichtungen 10 ist. An einem Ende des Gewebeklemmkonus 9 ist vorteilhafterweise ein Gewebeschneidemesser 4 angebracht, das das Gewebe 6 durch- oder anschneidet (s. Fig. 2 und 3) und zu Gewebetrenneinrichtungen 11 gehört. Entgegengesetzt ist bevorzugt ein Schneideoder Prägestempel 12 von Folienschwächungseinrichtungen 13 in Bolzen 14 geführt. Der Schneide- oder Prägestempel 12 wird in einer Weiterbildung der Erfindung durch eine Prägefeder 15 mit abgestimmter Kraft derart belastet, dass eine bei einem Crash leicht aufreissbare Verprägung 16 entsteht.

Der Schneide- oder Prägestempel 12 und das Gewebeschneidemesser 4, einschließlich des Gewebeklemmkonus 9 können bei Bedarf oder nach Wunsch auch an einem Mitnehmerbolzen 17 im Werkzeugkopf 5 durch einen Luftzylinder (nicht gezeigt) oder ähnliches mit Kraft beaufschlagt werden. Auch kann das Gewebeschneidemesser 4 im Gewebeklemmkonus 9 beweglich federbelastet gelagert werden (Fig. 3), um so unabhängig vom Gewebeklemmkonus 9 seine Arbeit verrichten zu können. Die Darstellung der Fig. 3 als schematischer Schnitt zeigt das geführte Gewebeschneidemesser 4, das mit einer Schneidefeder 18 belastet wird. Dieses Gewebeschneidemesser 4 kann durch die Schneidefeder 18 alleine arbeiten oder z.B. zum Arbeiten mit Druckluft (nicht gezeigt) unterstützt werden, nachdem das Gewebe 6 im Gewebeklemmkonus 9 gehalten wird.

Zweck dieser Ausführung ist, dass man für einen Airbagdeckel (Fig. 4) mit zwei Klappen 2 ein Gewebe 6 als ein Teil in das Werkzeug 5 einlegen kann, dieses Gewebe 6 automatisch schneidet und seine Gewebeenden 19 dann einen Schaum 20 im Airbagdeckel trennen und in jeder Klappe 2 halten, indem die Gewebeenden 19 am Boden oder Airbagklappenträger 21 jeder Airbagklappe 2 befestigt werden (Fig. 4).

Bevorzugt sind am Umfang des Werkzeuges 5 als weitere Bestandteile der Folienschwächungseinrichtungen 13 äußere Messer 22 insbesondere mit einer Klappvorrichtung 23 derart gelagert, dass sie im beigeschwenkten Zustand exakt lagepositioniert die Armaturentafelfolie 7 in Form der Gießhaut zum späteren gezielten einfachen Aufgehen der Klappen 2 anschneiden; nach der Positionierung der äußeren Messer 22 werden diese last- oder weggesteuert in die Gießhaut der Armaturentafel (nicht gezeigt) und der Airbagklappe(n) 2 gedrückt. Dabei wird Gewebe 6 an einer Festhalteleiste 24 einer Gewebehaltevorrichtung 25 am Werkzeug 5 positioniert.

Wenn das Werkzeug 5 positioniert ist, werden beispielsweise aus einem Sprühkopf 26, die zu Verbindungseinrichtungen 27 gehören, Klebemittel 28 oder ähnliche Mittel, wie z.B. Polyurethan-Folienmaterial, aufgebracht. Um die Zykluszeit für eine Verbindung Armaturentafelfolie 7 mit Gewebe 6 beim Herstellungsverfahren gering zu halten, wird z.B. bei heißer Gießhaut oder Armaturentafelfolie 7 kalte Luft oder ähnliches durch Kühlkanäle 29 eingeblasen und durch Abluftkanäle 30, die zusammen eine Kühlvorrichtung 31 bilden, herausgeführt.

Während des gesamten Herstellungsvorgangs ist die Armaturentafelfolie 7 in ggf. erforderlicher Weise gegen den Druck des Werkzeuges 5 abgestützt, wie es in der Technik üblich und daher hier nicht näher beschrieben ist.

Die erfindungsgemäße Airbagvorrichtung enthält eine wie vorstehend beschrieben gestaltete Armaturentafelfolie 7, die bei einer Auslösung der Airbagvorrichtung gezielt aufreißt und zusammen mit den Airbagklappen 2, einschließlich dem jeweiligen Boden 21, den Teilen des Gewebes 6 und den Teilen der Schaumschicht 17, in die Airbagvorrichtung hineingezogen wird, deren übrige Komponenten hinter, d.h. in der Fig. 4 unter den Airbagklappen 2 liegen und zur Vereinfachung nicht dargestellt sind, da sie für die vorliegende Erfindung nicht wesentlich sind. Allgemein enthält die Airbagvorrichtung aber wenigstens einen Gasgenerator, einen Airbag, der nach einer Auslösung der Airbagvorrichtung durch eine von den geöffneten Airbagklappen 2 gebildete Austrittsöffnung in einen Fahrzeuginnenraum hinein aufgeblasen wird (in der Fig. 4 nach oben), und eine Einzugsmechanik für die Airbagklappen 2 sowie eine Auslösesteuerung.

Vor dem Verbinden von Armaturentafelfolie 7 und Gewebe 6 sind bei dem vorliegenden Herstellungsverfahren der Airbagvorrichtung die Herstellungsschritte für die Gießhaut 2 selbst auszuführen. Nach der ausführlich beschriebenen Verbindung von Armaturentafelfolie 7 und Gewebe 6, einschließlich der dabei auch vorgenommenen Schnitte des Gewebes 6 und Prägung oder allgemein Schwächung der Armaturentafelfolie 7, sind insbesondere die Gewebeenden 19 mit dem jeweiligen Boden 21 fest zu verbinden und ist zwischen den Verbund aus Armaturentafelfolie 7 und Gewebe 6 einerseits und den Boden 21 einer Airbagklappe 2 andererseits der Schaum 20 einzubringen. Dies kann in jeweils technisch üblicher Weise erfolgen, so dass hier nicht weiter darauf eingegangen wird. Die so fertiggestellten Airbagklappen 2 werden dann an die Einzugsmechanik (nicht gezeigt) der Airbagvorrichtung, die davor oder danach komplettiert wird, angeschlossen.

Insbesondere wird durch die Erfindung somit auch ein Kombinationswerkzeug zur Massenherstellung von in der Armaturentafel integrierten Airbagklappen geschaffen, die zur Reduzierung der Verletzungsschwere nach innen in eine insbesondere modulare Airbagvorrichtung gezogen werden sollen. Mit einem solchen Werkzeug ist das Einbringen des Gewebes, das Durchschneiden des Gewebes z.B. in der Mitte zur Trennung zwischen zwei Klappen und die Befestigung des Gewebes sowie ein Vorschneiden oder Schwächen der Folie der Armaturentafelverkleidung genau, sicher und einfach möglich.

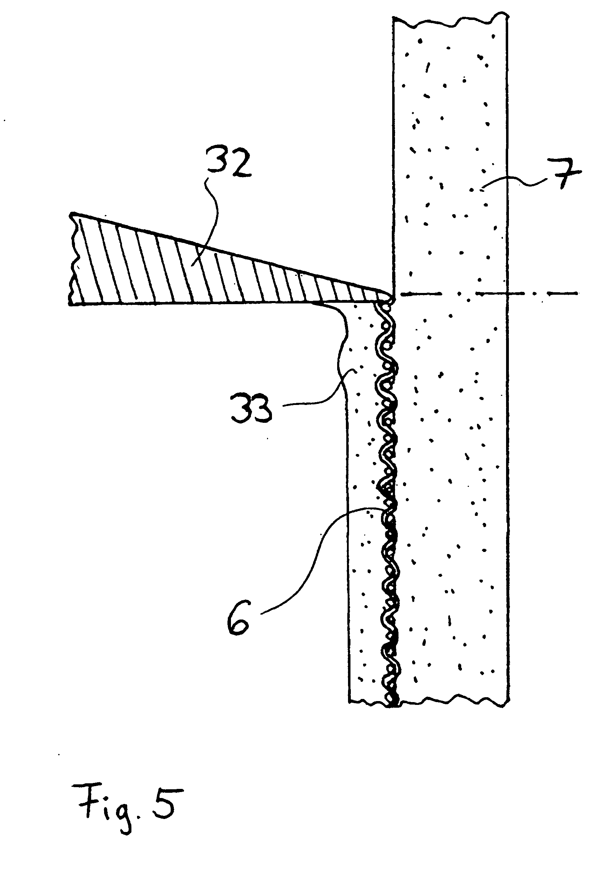

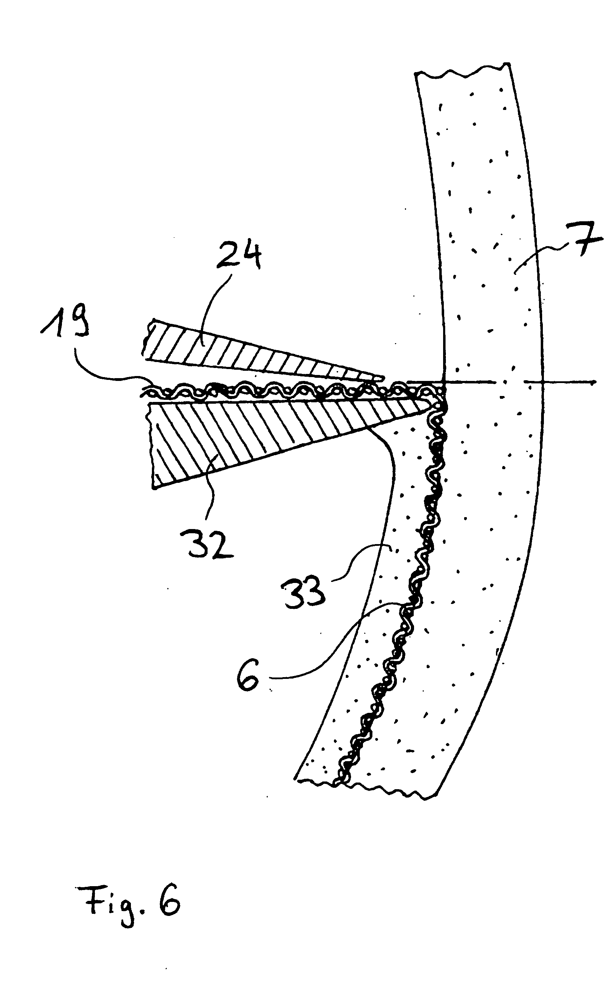

Eine weitere Alternative des Werkzeuges 5 ist in den Fig. 5 und 6 in schematischen teilweisen Schnitten eines zweiten Ausführungsbeispiels der Herstellungsvorrichtung 1 gezeigt. Hierbei handelt es sich um eine Ausführung für eine bzw. mit einer Airbagklappe 2. Hier dienen entsprechend spitz geformte Aufsatzwände 32 des Werkzeuges 5 als Gewebehalteeinrichtungen 10 und gleichzeitig Abdeckung beim Auftragen einer zweiten Folienschicht 33 statt des Klebemittels beim ersten Ausführungsbeispiel. Die Fig. 6 zeigt die Stelle, an der das Gewebe 6 zwischen der Gießhaut oder Armaturentafelfolie 2 und der zweiten Folienschicht 33 austritt. Dieser Steifigkeitssprung und die Abstellung des Gewebes 6 in dem Verbund aus Armaturentafelfolie 2, Gewebe 6 und zweiter Folienschicht 33 erübrigt ein Einschneiden der Gießhaut 2, wenn diese aus entsprechendem Material, z.B. Polyurethan besteht. Die Einlage. des Gewebes 6 und die streifenweise Abdeckung bei der Aufbringung der zweiten Folienschicht 33 ergibt einen vorteilhaften Steifigkeitssprung in dem Verbund aus Armaturentafelfolie 2, Gewebe 6 und zweiter Folienschicht 33, wodurch bei entsprechenden Materialien eine heute übliche Schwächung der Gießhaut 2 bei in eine Armaturentafel integrierter Klappe oder integrierten Klappen 2 entfallen kann. Das ist in leicht einsehbarer Weise ein Kostenvorteil, aber auch ein Qualitätsvorteil, da es an den Schwächungen der Armaturentafelfolie 2 zu keinen Einfallstellen und zu keine Sichtbarkeit bei Alterung des Materials kommen kann.

Bei den beiden ersten Ausführungsbeispielen gemäß den Fig. 1 bis 6 wird insgesamt eine Airbagvorrichtung mit wenigstens einer von einem Insassen wegbewegbaren Airbagklappe zur Freigabe einer Airbagaustrittsöffnung geschaffen, wobei die Airbagklappe zusammen mit einer Armaturentafel, in die sie integriert ist, eine gemeinsame Abdeckschicht aufweist, die dem Insassen zugewandt ist. Dabei ist die Abdeckschicht, wie beispielsweise eine Armaturentafelfolie, mit dem Airbagklappenträger oder Boden mittels gesonderter Einrichtungen, wie z.B. einem Gewebe, verbunden und erforderlichenfalls in Bereichen, in denen sich die Airbagklappe bei ihrer beginnenden Öffnung von der sie umgebenden Armaturentafel wegbewegt, geschwächt. Die Airbagklappe ist aus der Armaturentafelfolie, dem Gewebe, einem Verbindungsmittel, wie z.B. einem Kleber, um das Gewebe an der Armaturentafelfolie zu befestigen, einer Schaumschicht und dem Airbagklappenträger aufgebaut, mit dem das Gewebe ebenfalls an Gewebeenden verbunden ist.

Beim Auslösen der Airbagvorrichtung wird die wenigstens eine Airbagklappe zur Freigabe der Airbagaustrittsöffnung von einem Insassen wegbewegt, wobei auf den Airbagklappenträger mittels eines Zugmechanismus eine Kraft ausgeübt wird, die über das mit dem Airbagklappenträger verbundene Gewebe auch auf die Abdeckschicht übertragen wird, so dass letztere zusammen mit der Schaumstoffschicht zuverlässig im Verbund mit dem Airbagklappenträger hinter die Armaturentafel gezogen werden.

Dazu wird beim Herstellungsverfahren der Airbagvorrichtung die Abdeckschicht mit dem Airbagklappenträger mittels gesonderter Einrichtungen, wie z.B. dem Gewebe, verbunden und erforderlichenfalls in Bereichen, in denen sich die Airbagklappe bei ihrer beginnenden Öffnung von der sie umgebenden Armaturentafel wegbewegt, geschwächt. Dieses Herstellungsverfahren ist sowohl für Airbagklappen alleine, als auch für gesamte Airbagvorrichtungen vorteilhaft.

Die Herstellungsvorrichtung zur Durchführung des vorbeschriebenen Verfahrens enthält ein Werkzeug, das dazu ausgelegt ist, die Abdeckschicht mit einem Airbagklappenträger mittels gesonderter Einrichtungen, wie z.B. dem Gewebe, zu verbinden und erforderlichenfalls in Bereichen, in denen sich die Airbagklappe bei ihrer beginnenden Öffnung von der sie umgebenden Armaturentafel wegbewegt, zu schwächen.

Nachfolgend werden noch einige weitere Ausgestaltungsmöglichkeiten und Varianten der Erfindung, insbesondere des Herstellungsverfahrens und der Herstellungsvorrichtung angegeben.

Bei einer erfindungsgemäßen Airbagvorrichtung erfolgt beim Herstellen einer Airbagklappe automatisch das Anbinden eines Gewebes mittels des Werkzeuges an der Armaturentafelfolie, die eine Gießhaut oder Sprühhaut sein kann. Mittels des Werkzeuges kann die Folie in Airbagdeckelgröße aufgespannt werden. Das Werkzeug kann als Konturkopf passend zur Airbagdeckelform ausgebildet sein.

Das Gewebe kann zwischen den Airbagklappen zum Erhalt einer Anbindung zum Rückzug der Airbagklappen eingezogen oder mit letzteren fest verbunden sein. Während der Herstellung kann eine Lagesicherung der Gewebeenden mittels eines Konus erfolgen. Das Ein- oder Durchschneiden des Gewebes kann mittels Stanzmesser(n) realisiert werden, deren Stanztiefe durch einen Anschlag eines sie enthaltenden Stempels auf die Armaturentafelfolie reguliert wird. Das Ein- oder Durchschneiden des Gewebes kann auch mittels Pressluft, Federn oder andere Hilfsmittel erfolgen.

Um Sollreißstellen in der Armaturentafelfolie zu bilden können Prägestempel eingesetzt werden, die derart gestaltet sind, dass sie eine Prägenut in die Armaturentafelfolie drücken, die dann bei einer entsprechenden Belastung an dieser Stelle bevorzugt aufreißt. Sollreißstellen können ferner durch in das Werkzeug integrierte äußere Schneidemesser erzeugt werden, die vorzugsweise klappbar oder schiebbar u.ä. in ihre Arbeitsstellung gebracht werden können.

Das Werkzeug zum Anbringen des Gewebes an der Armaturentafelfolie kann derart geführt und ausgestaltet sein, dass seine Aufsatzwände insbesondere derart spitz geformt sind und als Abdeckschablone beim Aufbringen der Folienbefestigungsschicht dienen, um so einen zum Durchreissen der notwendigen Steifigkeitssprung zu gewährleisten und vorzugsweise möglichst stark zu gestalten. Das Werkzeug enthält ferner vorzugsweise Verbindungseinrichtungen insbesondere zum Aufsprühen eines Verbindungsmittels zum Befestigen des Gewebes an der Armaturentafelfolie. Außerdem kann eine Kühlvorrichtung im Werkzeuginneren vorgesehen sein, mittels der beispielsweise durch eingeblasene Luft oder allgemein Kühlmittel optimale Kleber- und Abkühlbedingungen für ggf. noch warmes Material der Armaturentafelfolie erzeugt werden.

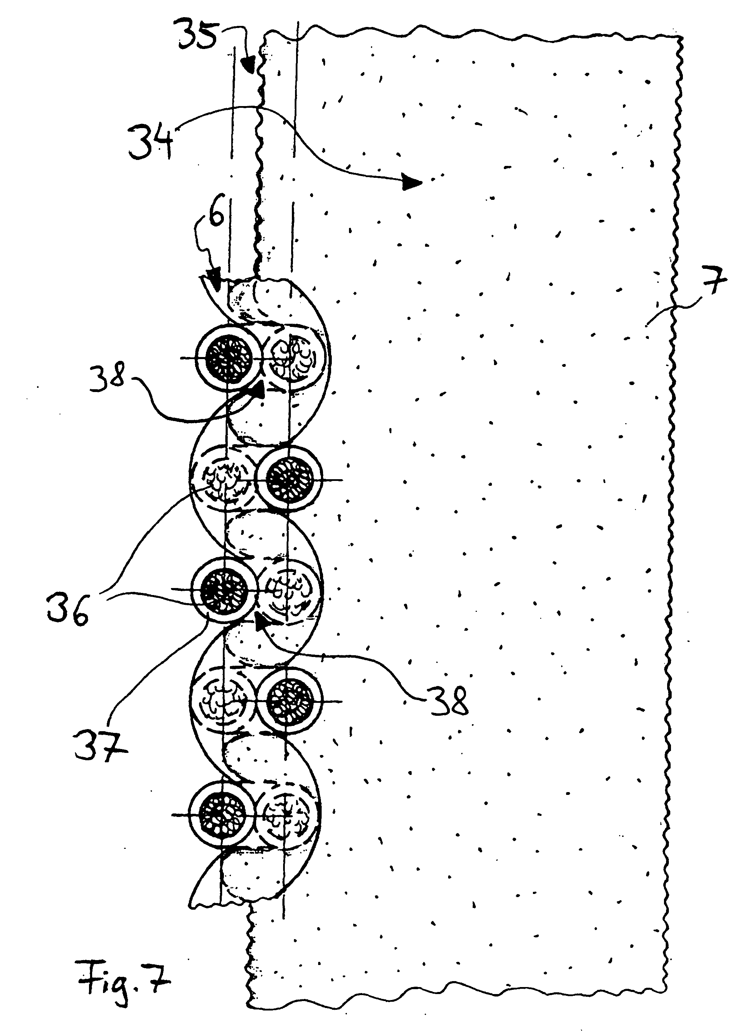

In den Fig. 7 bis 9 ist ein drittes Ausführungsbeispiel für eine Airbagvorrichtung behandelt, deren Airbagklappe(n) jedoch grundsätzlich ähnlich jenen der ersten und zweiten Ausführungsbeispiele aufgebaut sind. Diese dritte Variante eignet sich nur für sogenannte Gießhäute, die nicht im Sprüh-, sondern im Gießverfahren hergestellt werden (SLUSHHAUT) und derzeit weit verbreitet sind. Das Gewebe wird dabei bei beispielsweise einem Ausgelierprozess der Armaturentafelfolie oder Armaturentafel selbst im richtigen Moment (Temperatur, Weichheit) mit einem Werkzeug an bzw. in die Gießhaut gedrückt und bäckt dann während des Ausgelierprozesses fest. Diese Technik ist insbesondere üblicherweise bei PVC (Polyvinylchlorid) als Armaturentafel(folien)material vorteilhaft. Dazu kann ein Gewebe vorgesehen werden, dessen Fäden derart beschichtet sind, dass bei einem Einschmelzvorgang eine reissfeste Verbindung mit dem Armaturentafelmaterial entsteht. Eine Weiterbildung dieser Ausgestaltung besteht darin, dass das Gewebe derart hergestellt ist/wird, dass dieses insbesondere zweiseitig mit Material der Armaturentafel beschichtet ist. Zusätzlich oder alternativ können bei dem Gewebe die Fäden vor dem Weben mit Material umgeben sein/werden, was beim Einschmelzen einen ausreichenden Zusammenhalt mit der Armaturentafel ergibt. Alternativ kann das Gewebe derart ausgeführt sein/werden, dass Zwischenräume derart eingewebt sind, dass eine Schmelze der Armaturentafelfolie oder des Armaturentafelmaterials optimal eindringt und festigkeitsmäßig optimal hält.

Dies kann auch dadurch realisiert werden, dass auf ein insbesondere vorgeformtes Gewebes passend zur Armaturentafelkontur das noch flüssige Material der Armaturentafelfolie oder Armaturentafel selbst an dem Ort, an dem die Airbagklappe(n) sein soll(en), bei der Herstellung der Armaturentafel positioniert wird. Dazu kann das Gewebe zunächst auf einen Spannrahmen aufgespannt und danach beispielsweise auf dem Spannrahmen flächig dicht vor der noch fast flüssigen Armaturentafelfolie mittels z.B. Roboter positioniert werden.

Verfahrensmäßig ist es ferner bevorzugt, das Gewebe mit Druckluft gegen die Folienfläche zu blasen, wobei eine Optimierung der Luftdüsen in Druck, Zahl, Verteilung und Lage von Vorteil ist. Ferner kann ein Düsenpaket entlang des Gewebes zur optimalen berührungsfreien Einbringung bewegt werden. Es ist auch bevorzugt, die Druckluft entsprechend zu temperieren. Eine Herstellungsvorrichtung ist entsprechend ausgestaltet. Weiterhin können die Geweberänder auf einer Rahmenseite fest und auf der gegenüber liegenden Rahmenseite flexibel zum gleichmäßigen Einblasen des Gewebes in das Material der Armaturentafelfolie gehalten werden/sein.

Die Gewebeflächen können mit einem Spannrahmen und Roboter an das Material, mit dem das Gewebe zu verbinden ist, herangebracht und schließlich mit Luftstrahlen oder Luftkissen angedrückt werden. Das Andrücken an das Material der Armaturentafel(folie) kann alternativ auch mittels entsprechend geformter Schaumkissen erfolgen. Eine weitere Alternative besteht im Aufspannen des Gewebes auf einen zur Oberflächenkontor der Armaturentafel an der Stelle der Airbagklappen passenden gegossenen Formkopf.

Vorzugsweise sind die Gewebefläche und Zugseile zum Verbinden des Gewebes mit der Einzugsmechanik ein verclinchter, vernieteter oder verschraubter Zusammenbau, der auch stabile Materialien, insbesondere Bleche aus Metall, enthält.

Bevorzugt wird das Gewebefläche so verarbeitet, dass es diagonal auf Zug beansprucht wird, um so alle Fäden gleichmäßig zu beanspruchen.

Die Fig. 7 zeigt einen vergrößerten Ausschnitt einer Armaturentafelfolie 7 mit einer Narbung 34, die optisch nicht gestört werden darf. An der Unterseite 35 der Armaturentafelfolie 7 ist das Gewebe 6 etwa zu 50 % seiner Stärke derart eingelegt, dass die Haftung mit und Störung der Armaturentafelfolie 7 optimiert sind. Hierzu werden bereits die Fäden 36, aus denen das Gewebe gefertigt wird, mit dem Material 37 der Armaturentafelfolie umgeben. Dies geschieht vor, während oder nach dem Weben oder durch technisch übliches Beschichten. Das Gewebe 6 ist ferner derart mit Hohlräumen 38 ausgestaltet, dass das weiche Material 37 der Armaturentafelfolie 7 formschlüssig einfließen kann. Das Material 37, mit dem das Gewebe 6 beschichtet ist, und das Material 37, aus dem die Armaturentafelfolie 7 gebildet sind, sind gleich. Es können aber auch verschiedene Materialien verwendet werden, die zur bestmöglichen Haftung optimal aufeinander abgestimmt sind. Außerdem ist des Gewebe 6 derart gewebt und/oder aus einem solchen Material der Fäden 36 hergestellt, dass Wärme- und Alterungsschrumpfung der Armaturentafelfolie 7 und des Gewebes 6 in gleicher Grössenordnung liegen. Andernfalls können Beulen oder Buckel an der Oberfläche der Armaturentafelfolie auftreten. Weiter ist es bevorzugt, das Gewebe 6 passend vorgeformt ohne "Verwackeln" in die noch heiße und teigartig flüssige Armaturentafelfolie 7 einzulegen.

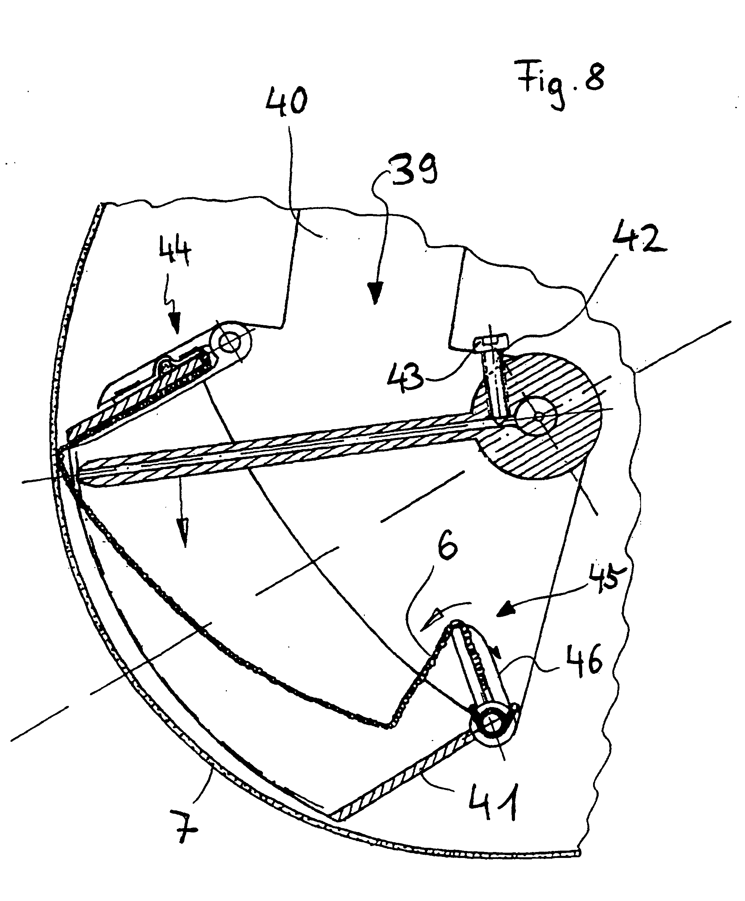

Hierzu zeigt die Fig. 8 einen Ausschnitt eines Werkzeuges 39 als Bestandteil der Herstellungsvorrichtung 1 für Airbagklappen 2 einer Airbagvorrichtung und insbesondere zur Herstellung der Armaturentafelfolie 7. Letztere wird beispielsweise in technisch üblicher Art, weshalb hier dazu keine gesonderte Beschreibung angegeben wird, in einer "Galvanoform" (nicht gezeigt) gesprüht oder "gebacken". Erfindungsgemäß wird das Werkzeug 39 bereits geöffnet, wenn die Armaturentafelfolie 7 noch fast flüssig ist. Ein Roboterarm 40 bringt einen entsprechend der Kontur der Armaturentafelfolie 7 geformten Rahmen 41 in Position, der Bestandteil von Gewebehalteeinrichtungen 10 ist. Auf dem Rahmen 41 ist das Gewebe 6 vorgeformt aufgebracht. In Reihe angebrachte Luftdüsen 42 werden individuell im Durchfluss mit z.B. Drosselschrauben 43 und dem Gewebe 6 abwälzend und drehend derart folgend eingestellt, dass das Gewebe 6 im Verlauf dieser Folgebewegung gleich stark in die Armaturentafelfolie 7 eingedrückt wird. An der Befestigungsstartseite 44 des vorgeformten Gewebes 6 wird es am Rahmen 41 gehalten und auf der Befestigungsendseite 45 des Rahmens 41 nachgebend z.B. mit einer federnden Einspannung 46 fixiert. Drucklufttemperatur, Blaszeit, Folientemperatur, Düsenausführung, -abstand und Bewegungsgeschwindigkeit können je nach konkretem Aufbau und speziellen Materialien ohne weiteres im Versuch ermittelt und danach festgelegt und gesteuert werden.

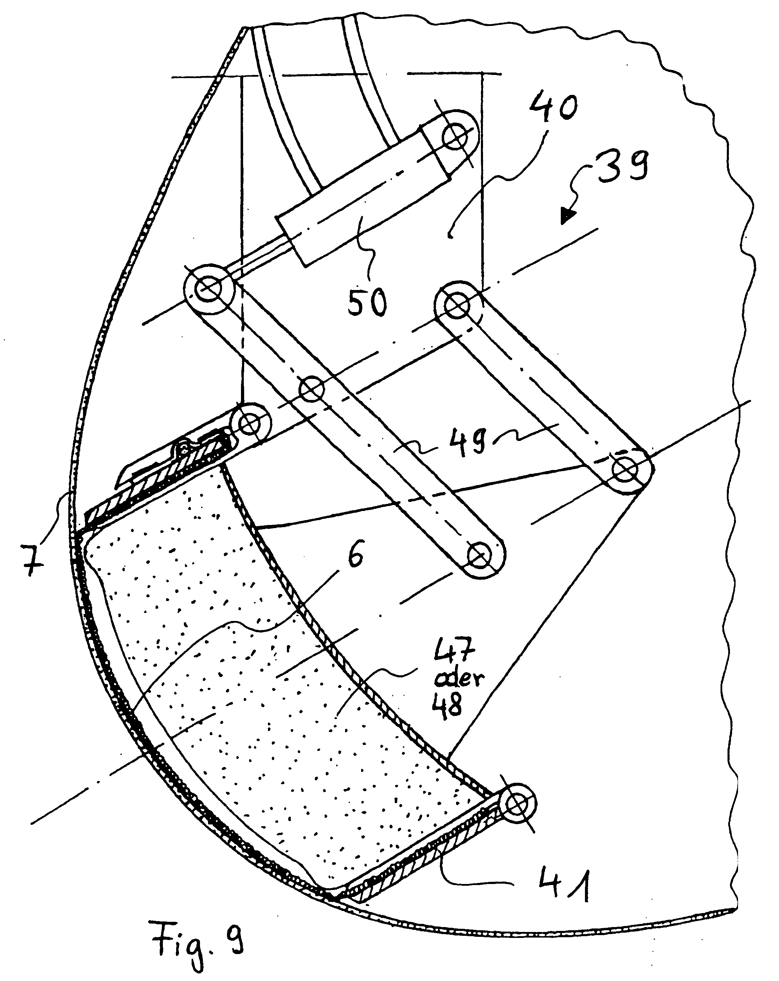

Die Fig. 9 zeigt eine weitere Alternative des Einlegens des Gewebes 6. Hier wird der Rahmen 41 mit dem aufgespannten Gewebe 6 ebenfalls mit einem Roboterarm 40 in Position gebracht. Nur wird hier ein formoptimiertes Schaumteil 47 oder ein Luftkissen 48 oder ähnliches über Hebel 49 oder Gleitstücke (nicht gezeigt) geführt. Eine Robotermechanik (hier durch den Zylinder 50 symbolisch dargestellt) drückt das Schaumteil 47 oder Luftkissen 48 abgestimmt auf das Gewebe 6.

Als Alternative ist das Aufspannwerkzeug für das Gewebe 6 ein Formkopf (nicht gezeigt), der exakt der Form der Armaturentafelfolie 7 nachgebildet ist. Vorzugsweise kann auch das Gewebe 6 mittels gesonderter Gewichte (nicht gezeigt) und/oder mittels des Gewichts des Formkopfes (nicht gezeigt) eingebracht werden.

Vorzugsweise ist es sinnvoll, das Gewebe zu einer bestimmten Temperatur (z.B. 190°C) der Gießhaut oder Armaturentafelfolie 7 einzudrücken und das z.B. gesonderte Gewicht (nicht gezeigt) oder allgemein den Auflagedruck des Gewebes 6 auf die Armaturentafelfolie 7 bis zu einer bestimmten Temperaturabsenkung (z.B. 65°C) aufrecht zu erhalten.

Mit dem Gewebe 6 können auch die Zugseile 52 gleich mit angebracht werden.

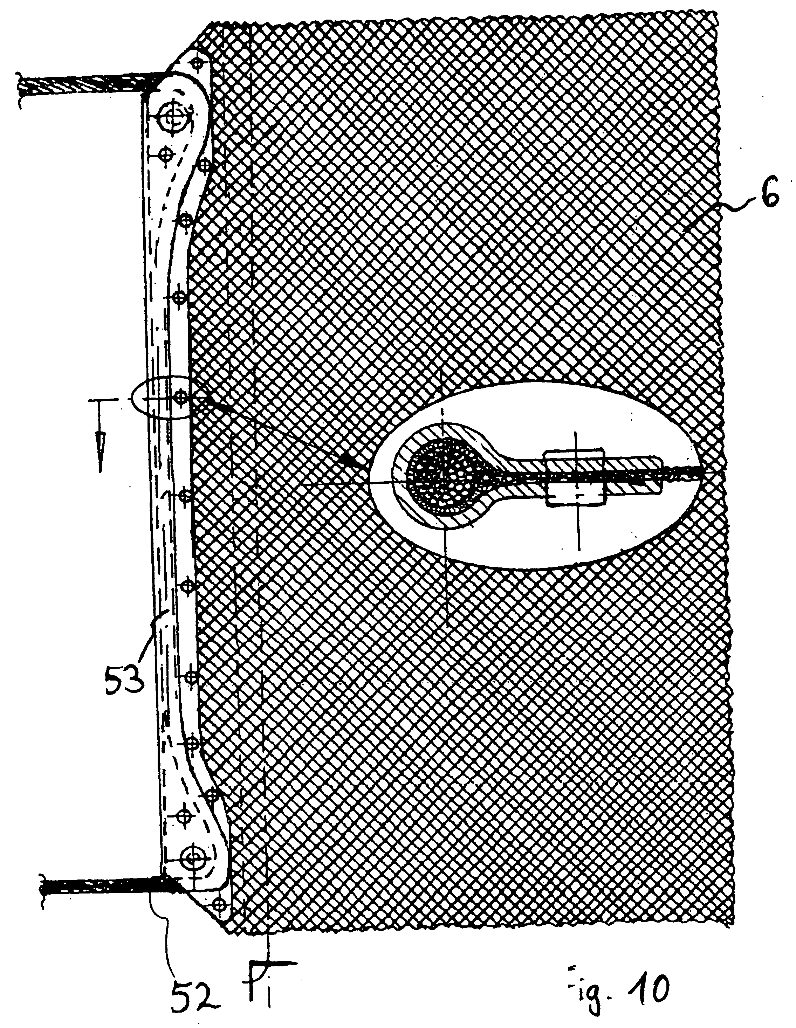

Die Fig. 10 zeigt eine weitere Alternative des Gewebes 6 und dessen Anbindung der Zugseile 52 mittels einer, vorzugsweise aus Metall hergestellten, V-förmig vorgeformten oder mehrteiligen Klemmleiste 53. Die Zugseile 52 werden in das umgefaltete Gewebe 6 und im Zusammenbau in die V-förmig vorgeformte oder mehrteilige Klemmleiste 53 eingelegt. Der Zusammenbau wird miteinander verclincht, verklemmt oder vernietet.

Nachfolgend werden Ausgestaltungsmöglichkeiten für die Airbagvorrichtung und speziell deren Airbagklappe, deren Herstellungsverfahren und -vorrichtung gemäß den in den Fig. 7 bis 10 gezeigten Ausführungsbeispielen angegeben. hinsichtlich der Angaben zur Airbagvorrichtung insgesamt wird auf die Ausführungen weiter vorne zu den ersten und zweiten Ausführungsbeispielen verwiesen.

Beim dritten Ausführungsbeispiel wird ein Gewebe verwendet, dessen Fäden derart beschichtet sind, dass eine reissfeste Bindung mit der Armaturentafel beim Einschmelzen darin entsteht. Das Gewebe kann derart hergestellt sein/werden, dass es oder die Fäden aus denen es besteht, insbesondere zweiseitig mit Material der Armaturentafel oder mit damit gut verbindendem Material beschichtet ist. Dazu können die Fäden vor dem Weben des Gewebes mit einem solchen Material umgeben sein/werden, das ausreichend beim Einschmelzen Haftung mit der Armaturentafel ergibt. Alternativ oder zusätzlich kann das Gewebe derart mit Zwischenräumen ausgeführt sein/werden, dass die Armaturentafel(folien)schmelze optimal eindringt und festigkeitsmäßig optimal hält.

Es kann ein vorgeformtes Gewebe passend zur Armaturentafelkontur an der Stelle der Airbagklappe(n) verwendet werden. Die Herstellungsvorrichtung kann einen Spannrahmen enthalten, auf den das Gewebe aufgespannt ist/wird. Verfahren und Vorrichtung zur Herstellung können derart sein, dass das Gewebe auf dem Spannrahmen flächig dicht vor der noch fast flüssigen Folie mittels Roboter positioniert wird, wobei dann vorzugsweise das Gewebe mit Druckluft gegen die Folienfläche geblasen wird. Hierzu zu verwendende Luftdüsen sind in Druck, Zahl, Verteilung und Lage optimiert, und werden insbesondere entlang des Gewebes zur optimalen berührungsfreien Einbringung bewegt. Vorzugsweise wird die Druckluft entsprechend temperiert.

Verfahrens- und vorrichtungsmäßig kann vorgesehen sein, dass die Gewebeflächen auf einem Rahmen fest und auf der gegenüber liegenden Rahmenseite flexibel zum gleichmäßigen Einblasen des Gewebes fixiert werden. Alternativ oder zusätzlich können die Gewebeflächen mit Spannrahmen und Roboter eingebracht, jedoch mit Luftkissen angedrückt, oder mit entsprechend geformten Schaumkissen eingebracht werden. Die Eindrückkraft kann aus einem Gewicht bestehen, das während eines bestimmten Temperaturbereiches während des Geliervorganges eingedrückt wird. Das Gewebe kann mit oder ohne Zugseile auf einen Formkopf aufgebracht werden, der exakte der Form der Armaturentafel entspricht.

Vorzugsweise ist die Materialkombination von Folien- und Gewebematerial bei allen Ausführungsbeispielen derart, dass Folienschrumpfung und Gewebeschrumpfung bei Temperaturänderung und Alterung gleich sind. Insbesondere sind die Materialschrumpfung des Gewebes und der Folie ausgeglichen. Es ist auch möglich, dass die Nachgiebigkeit der Gewebemaschen für gleiches Schrumpfverhalten bei Gewebe und Folie sorgen. Die Gewebehalteeinrichtungen sorgen bei den einzelnen Ausgestaltungen der Erfindung vorzugsweise für einen gleichmäßigen Andruck des Gewebes gegen die Armaturentafelfolie.

## Patentansprüche

1. Verfahren zur Herstellung einer Airbagvorrichtung (3) mit einer Airbagklappe (2), die, wenn die Airbagvorrichtung in ein Fahrzeug eingebaut ist, zum Austritt eines Airbags von einem Insassen weg zu öffnen ist, wobei die Airbagklappe zusammen mit einer Armaturentafel, in die sie integriert ist, eine gemeinsame Abdeckschicht (7) aufweist, die mit ihrer Außenfläche dem Insassen zugewandt ist, wobei
ein Gewebe (6) innerhalb der Airbagklappe (2) mit einem Klebemittel (28) befestigt wird und zwischen einem Airbagklappenträger (21) und der Abdeckschicht (7) ein Schaum (20) eingebracht wird, um aus der Abdeckschicht (7), dem Gewebe (6), dem Schaum (20) und dem Airbagklappenträger (21) die Airbagklappe (2) zu bilden, **dadurch gekennzeichnet, dass** das Gewebe (6) an die Innenfläche der Abdeckschicht (7) aufgebracht oder in die Abdeckschicht (7) eingebracht und mit dieser fest verbunden wird, bevor zwischen diesen Verbund und den Airbagklappenträger (21) der Schaum (20) eingebracht wird, und
dass auf das Gewebe (6) das Klebemittel (28) oder ein anderes härtendes Material (37) aufgesprüht wird, nachdem das Gewebe (6) an die Abdeckschicht (7) gebracht wurde.

2. Verfahren nach Anspruch 1, **dadurch gekennzeichnet, dass** die noch nicht vollständig erkaltete Abdeckschicht (7) gekühlt wird, nachdem das Gewebe (6) an oder in die Abdeckschicht (7) gebracht wurde.

3. Verfahren nach Anspruch 1 oder 2, **dadurch gekennzeichnet, dass** das Gewebe (6) innerhalb von zwei benachbarten Airbagklappen (2) an oder in die Abdeckschicht (7) gebracht und längs der Grenzlinie zwischen den beiden Airbagklappen (2) durchtrennt wird, bevor der Schaum (20) zwischen den Verbund aus Gewebe (6) und Abdeckschicht (7) einerseits und dem Airbagklappenträger (21) andererseits eingebracht wird.

4. Verfahren nach einem der vorhergehenden Ansprüche, **dadurch gekennzeichnet, dass** die Abdeckschicht (7) längs des Umfangs der Airbagklappe (2) geschwächt wird, bevor der Schaum (20) zwischen den Verbund aus Gewebe (6) und Abdeckschicht (7) einerseits und dem Airbagklappenträger (21) andererseits eingebracht wird.

5. Verfahren nach einem der vorhergehenden Ansprüche, **dadurch gekennzeichnet, dass** das Gewebe (6) flächig oder fortlaufend an oder in die Abdeckschicht (7) bewegt wird.

6. Vorrichtung zur Durchführung des Verfahrens nach einem der Ansprüche 1 bis 5, welche Vorrichtung ein Werkzeug (5) mit Gewebehalteeinrichtungen (10) enthält, mittels denen das Gewebe (6) innerhalb der Airbagklappe (2) mit der Abdeckschicht (7) derart zusammenbringbar ist, dass das Gewebe (6) relativ zur Abdeckschicht (7) positionierbar und festlegber ist, **dadurch gekennzeichnet,**
**dass** das Werkzeug (5) Verbindungseinrichtungen (27) mit wenigstens einem Sprühkopf (26) zur Abgabe von Klebemittel (28) oder anderen härtbaren Material 37) zur Verbindung von Gewebe (6) und Abdeckschicht (7) enthält.

7. Vorrichtung nach Anspruch 6, **dadurch gekennzeichnet, dass** das Werkzeug (5) eine Kühlvorrichtung (31) zum Kühlen der Abdeckschicht (7) aufweist.

8. Vorrichtung nach Anspruch 6 oder 7, **dadurch gekennzeichnet, dass** die Gewebehalteeinrichtungen (10) ausgelegt sind, um das Gewebe (6) flächig oder fortlaufend an oder in die Abdeckschicht (7) zu bewegen.

9. Vorrichtung nach einem der Ansprüche 6 bis 8, **dadurch gekennzeichnet, dass** das Werkzeug (5) Gewebetrenneinrichtungen (11) und/oder Folienschwächungseinrichtungen (13) enthält.

10. Vorrichtung nach Anspruch 9, **dadurch gekennzeichnet, dass** die Gewebetrenneinrichtungen (11) ausgelegt sind, das Gewebe (6) an einer Trennungslinie zwischen zwei Airbagklappen (2) zu durchtrennen, und/oder dass die Folienschwächungseinrichtungen (13) ausgelegt sind, die Abdeckschicht (7) längs der Umfangslinie der Airbagklappe (2) zu schwächen.

11. Airbagvorrichtung (3) mit einer Airbagklappe (2), die, wenn die Airbagvorrichtung in ein Fahrzeug eingebaut ist, zum Austritt eines Airbags von einem Insassen weg zu öffnen ist,
wobei die Airbagklappe zusammen mit einer Armaturentafel, in die sie integriert ist, eine gemeinsame Abdeckschicht (7) aufweist, die dem Insassen zugewandt ist, wobei
die Airbagklappe (2) einen Aufbau mit der Abdeckschicht (7), einem Schaum (20) und einem zumindest im wesentlichen stabilen Airbagklappenträger (21) in dieser Reihenfolge aufweist, sowie mit einem Gewebe (6) ausgestattet ist, das mit einem Klebemittel (28) befestigt ist, welches das Gewebe (6) wenigstens teilweise überdeckt, **dadurch gekennzeichnet, dass**
dass das Gewebe (6) mittels des Klebemittels (28) oder eines anderen härtenden Materials (37) an die Abdeckschicht (7) angeklebt und mit dieser fest verbunden ist.

12. Airbagvorrichtung nach Anspruch 11, **dadurch gekennzeichnet, dass** das Gewebe (6) Zwischenräume aufweist, durch welche das Klebemittel (28) oder Material (37) direkt mit der Abdeckschicht (7) in Verbindung ist.

13. Airbagvorrichtung nach Anspruch 11, **dadurch gekennzeichnet, dass** das Gewebe (6) in die Abdeckschicht (7) zumindest teilweise eingebettet ist.

14. Airbagvorrichtung nach einem der Ansprüche 11 bis 13, **dadurch gekennzeichnet, dass** das Gewebe (6) Fäden (36) enthält, die mit einem mit dem Material der nicht ausgehärteten Abdeckschicht (7) fest verbindenden Material (37) zumindest teilweise überzogen sind, oder dass das Gewebe (6) zumindest teilweise mit einem solchen Material (37) überzogen ist.

## Claims

1. Method for producing an airbag arrangement (3) with an airbag flap (2), which, when the airbag arrangement is installed in a vehicle, is to be opened away from an occupant in order to let out an airbag, the airbag flap having, together with the dashboard in which it is integrated, a common covering layer (7), the outer surface of which faces the occupant, a fabric (6) being fastened within the airbag flap (2) with an adhesive (28) and a foam (20) being placed between an airbag-flap support (21) and the covering layer (7) in order to form the airbag flap (2) from the covering layer (7), the fabric (6), the foam (20) and the airbag-flap support (21), **characterized in that** the fabric (6) is attached to the inner surface of the covering layer (7) or is placed into the covering layer (7) and is connected fixedly to it before the foam (20) is placed between this bond and the airbag-flap support (21), and **in that** the adhesive (28) or another curing material (37) is sprayed onto the fabric (6) after the fabric (6) has been placed onto the covering layer (7).

2. Method according to Claim 1, **characterized in that** the covering layer (7) which has not yet completely cooled down is cooled after the fabric (6) has been placed onto or into the covering layer (7).

3. Method according to Claim 1 or 2, **characterized in that** the fabric (6) is placed onto or into the covering layer (7) within two adjacent airbag flaps (2) and is severed along the boundary line between the two airbag flaps (2) before the foam (20) is placed between the bond comprising the fabric (6) and covering layer (7), on the one hand, and the airbag-flap support (21), on the other hand.

4. Method according to one of the preceding claims, **characterized in that** the covering layer (7) is weakened along the circumference of the airbag flap (2) before the foam (20) is placed between the bond comprising the fabric (6) and covering layer (7), on the one hand, and the airbag-flap support (21), on the other hand.

5. Method according to one of the preceding claims, **characterized in that** the fabric (6) is moved in a sheet-like manner or continuously onto or into the covering layer (7).

6. Arrangement for carrying out the method according to one of Claims 1 to 5, which arrangement contains a tool (5) having fabric-retaining devices (10) which can be used to bring the fabric (6) together with the covering layer (7) within the airbag flap (2) in such a manner that the fabric (6) can be positioned and secured relative to the covering layer (7), **characterized in that** the tool (5) contains connecting devices (27) having at least one spray head (26) for dispensing adhesive (28) or another curable material (37) to connect the fabric (6) and covering layer (7).

7. Arrangement according to Claim 6, **characterized in that** the tool (5) has a cooling arrangement (31) for cooling the covering layer (7).

8. Arrangement according to Claim 6 or 7, **characterized in that** the fabric-retaining devices (10) are designed to move the fabric (6) in a sheet-like manner or continuously onto or into the covering layer (7).

9. Arrangement according to one of Claims 6 to 8, **characterized in that** the tool (5) contains fabric-severing devices (11) and/or film-weakening devices (13).

10. Arrangement according to Claim 9, **characterized in that** the fabric-severing devices (11) are designed for severing the fabric (6) along a separating line between two airbag flaps (2), and/or **in that** the film-weakening devices (13) are designed to weaken the covering layer (7) along the circumferential line of the airbag flap (2).

11. Airbag arrangement (3) with an airbag flap (2), which, when the airbag arrangement is installed in a vehicle, is to be opened away from an occupant in order to let out an airbag, the airbag flap having, together with a dashboard in which it is integrated, a common covering layer (7) which faces the occupant, the airbag flap (2) having a construction with the covering layer (7), a foam (20) and an at least essentially stable airbag-flap support (21) in this sequence, and being provided with a fabric (6) which is fastened by an adhesive (28) which at least partially covers the fabric (6) is bonded onto the covering layer (7) by means of the adhesive (28) or another curing material (37) and is connected fixedly to the said covering layer.

12. Airbag arrangement according to Claim 11, **characterized in that** the fabric (6) has gaps through which the adhesive (28) or material (37) is connected directly to the covering layer (7).

13. Airbag arrangement according to Claim 11, **characterized in that** the fabric (6) is at least partially embedded in the covering layer (7).

14. Airbag arrangement according to one of Claims 11 to 13, **characterized in that** the fabric (6) contains threads (36) which are at least partially covered by a material (37) connected fixedly to the material of the non-cured covering layer (7), or **in that** the fabric (6) is at least partially covered by a material (37) of this type.

## Revendications

1. Procédé pour fabriquer un dispositif d'airbag (3), avec un panneau d'airbag (2), qui, lorsque le dispositif d'airbag est intégré dans un véhicule, doit s'ouvrir à l'écart d'un occupant pour laisser sortir un airbag, le panneau d'airbag présentant, conjointement avec un tableau de bord dans lequel il est intégré, une couche de revêtement commune (7) qui est tournée avec sa surface extérieure vers l'occupant,
dans lequel un tissu (6) est fixé à l'intérieur du panneau d'airbag (2) avec un adhésif (28) et une mousse (20) est placée entre un support de panneau d'airbag (21) et la couche de revêtement (7), afin de former, à partir de la couche de revêtement (7), du tissu (6), de la mousse (20) et du support de panneau d'airbag (21) le panneau d'airbag (2),
**caractérisé en ce que**
le tissu (6) est appliqué contre la surface interne de la couche de revêtement (7) ou est introduit dans la couche de revêtement (7) et est connecté fixement à celle-ci, avant que l'on introduise la mousse (20) entre ce composite et le support de panneau d'airbag (21), et **en ce que** l'adhésif (28) ou un autre matériau durcissant (37) est pulvérisé sur le tissu (6) après que le tissu (6) a été appliqué contre la couche de revêtement (7).

2. Procédé selon la revendication 1, **caractérisé en ce que** la couche de revêtement (7) pas encore complètement refroidie est refroidie, après que l'on a appliqué le tissu (6) contre ou dans la couche de revêtement (7).

3. Procédé selon la revendication 1 ou 2, **caractérisé en ce que** le tissu (6) est appliqué contre ou dans la couche de revêtement (7) à l'intérieur de deux panneaux d'airbag adjacents (2) et est séparé le long de la limite entre les deux panneaux d'airbag (2) avant que la mousse (20) soit introduite entre le composite constitué du tissu (6) et de la couche de revêtement (7) d'une part et le support de panneau d'airbag (21) d'autre part.

4. Procédé selon l'une quelconque des revendications précédentes, **caractérisé en ce que** la couche de revêtement (7) est affaiblie le long de la périphérie du panneau d'airbag (2) avant que la mousse (20) soit introduite entre le composite constitué du tissu (6) et de la couche de revêtement (7) d'une part et le support de panneau d'airbag (21) d'autre part.

5. Procédé selon l'une quelconque des revendications précédentes, **caractérisé en ce que** le tissu (6) est amené à plat ou progressivement contre ou dans la couche de revêtement (7).

6. Dispositif pour mettre en oeuvre le procédé selon l'une quelconque des revendications 1 à 5, lequel dispositif comprend un outil (5) avec des dispositifs de maintien du tissu (10) au moyen desquels le tissu (6) peut être réuni à l'intérieur du panneau d'airbag (2) à la couche de revêtement (7) de telle sorte que le tissu (6) puisse être positionné et fixé par rapport à la couche de revêtement (7),
**caractérisé en ce que**
l'outil (5) comprend des dispositifs de connexion (27) avec au moins une tête de pulvérisation (26) pour délivrer de l'adhésif (28) ou un autre matériau durcissable (37) en vue de connecter le tissu (6) et la couche de revêtement (7).

7. Dispositif selon la revendication 6, **caractérisé en ce que** l'outil (5) présente un dispositif de refroidissement (31) pour refroidir la couche de revêtement (7).

8. Dispositif selon la revendication 6 ou 7, **caractérisé en ce que** les dispositifs de maintien du tissu (10) sont conçus pour amener le tissu (6) à plat ou progressivement contre ou dans la couche de revêtement (7).

9. Dispositif selon l'une quelconque des revendications 6 à 8, **caractérisé en ce que** l'outil (5) comprend des dispositifs de séparation du tissu (11) et/ou des dispositifs d'affaiblissement de feuille (13).

10. Dispositif selon la revendication 9, **caractérisé en ce que** les dispositifs de séparation du tissu (11) sont conçus pour séparer le tissu (6) au niveau d'une ligne de séparation entre deux panneaux d'airbag (2) et/ou **en ce que** les dispositifs d'affaiblissement de feuille (13) sont conçus pour affaiblir la couche de revêtement (7) le long de la ligne de périphérie du panneau d'airbag (2).

11. Dispositif d'airbag (3) comprenant un panneau d'airbag (2) qui, lorsque le dispositif d'airbag est intégré dans un véhicule, doit s'ouvrir à l'écart d'un occupant pour laisser sortir un airbag, le panneau d'airbag présentant, conjointement avec un tableau de bord dans lequel il est intégré, une couche de revêtement commune (7) qui est tournée vers l'occupant,
dans lequel le panneau d'airbag (2) présente une construction avec la couche de revêtement (7), une mousse (20) et un support de panneau d'airbag (21) au moins essentiellement stable, dans cette succession, et est muni d'un tissu (6) qui est fixé avec un adhésif (28), lequel recouvre au moins partiellement le tissu (6),
**caractérisé en ce que**
le tissu (6) est collé au moyen de l'adhésif (28) ou d'un autre matériau durcissable (37) sur la couche de revêtement (7) et est connecté fixement à celle-ci.

12. Dispositif d'airbag selon la revendication 11, **caractérisé en ce que** le tissu (6) présente des espaces intermédiaires à travers lesquels l'adhésif (28) ou le matériau (37) est directement en liaison avec la couche de revêtement (7).

13. Dispositif d'airbag selon la revendication 11, **caractérisé en ce que** le tissu (6) est au moins partiellement noyé dans la couche de revêtement (7).

14. Dispositif d'airbag selon l'une quelconque des revendications 11 à 13, **caractérisé en ce que** le tissu (6) contient des brins (36) qui sont au moins partiellement recouverts avec un matériau (37) se connectant fixement au matériau de la couche de revêtement (7) non encore durcie ou **en ce que** le tissu (6) est au moins partiellement recouvert par un tel matériau (37).
